# EUROPÄISCHE PATENTSCHRIFT

(11) **EP 3 325 825 B1**
(45) Veröffentlichungstag und Bekanntmachung des Hinweises auf die Patenterteilung: **31.03.2021**
(21) Anmeldenummer: 16735858.9
(22) Anmeldetag: 05.07.2016
(51) Int. Cl.: F16B 37/04, F16B 5/06, F16B 21/07, F16B 37/08

(54) **CLIPKÖRPER, CLIP UND BEFESTIGUNGSANORDNUNG**
CLIP BODY, CLIP, AND SECURING ASSEMBLY
CORPS DE CLIP, CLIP ET SYSTÈME DE FIXATION

(30) Priorität: 24.07.2015 DE 102015009643
(43) Veröffentlichungstag der Anmeldung: 30.05.2018
(73) Patentinhaber: SFS Intec Holding AG, 9435 Heerbrugg (CH)
(72) Erfinder: COSTABEL, Sascha, 71083 Herrenberg (DE)
(86) Internationale Anmeldenummer: PCT/EP2016/065767
(87) Internationale Veröffentlichungsnummer: WO 2017/016815

(56) Entgegenhaltungen:
- DE-U1-202006 014 151
- US-A- 5 599 148

## Beschreibung

Die Erfindung betrifft einen Clipkörper mit einer Halterung für eine Befestigungseinrichtung, wobei der Clipkörper an einer mit mindestens einer Befestigungsöffnung versehenen Platte befestigbar ist, wobei der Clipkörper zwei Schenkel aufweist, von denen einer auf einer ersten Seite der Platte und der andere auf einer zweiten Seite der Platte angeordnet werden kann, und zu diesem Zweck auf einen Rand der Platte aufgesteckt wird und wobei der Clipkörper mindestens ein Positionierelement aufweist. Weiterhin betrifft die Erfindung einen Clip und eine Befestigungsanordnung.

Clips der vorgestellten Art werden insbesondere dazu verwendet, zwei Bauteile miteinander zu verbinden, beispielsweise zwei Platten im Innenbereich eines Fahrzeugs oder Flugzeugs. Zu diesem Zweck wird der Clip auf eine der Platten aufgesteckt, und zwar im Bereich einer Befestigungsöffnung der Platte. Der Clip wird so positioniert, dass eine Befestigungseinrichtung des Clips mit der Befestigungsöffnung der Platte fluchtet. Die Platte muss dann nur noch mit der anderen Platte, an der sie befestigt werden soll und die ebenfalls eine Befestigungsöffnung aufweist, zusammengeführt werden, um dann mit einem Gegenstück zu der Befestigungseinrichtung des Clips eine Befestigung der gesamten Befestigungsanordnung zu erreichen.

Beispiele solcher Clips sind beschrieben in DE 20 2006 014 151 U1, US 6,918,725 B2, und US 6,474,917 B2.

Allen diesen Clips ist gemeinsam, dass sie zwei Schenkel aufweisen, von denen einer auf der einen Seite der Platte und der andere auf der anderen Seite der Platte angeordnet wird. Zu diesem Zweck wird der Clip auf einen Rand der Platte aufgesteckt. Axiale Kräfte, das heißt Kräfte die senkrecht oder nahezu senkrecht zu der Platte wirken, müssen durch die Federkraft der beiden miteinander verbundenen Schenkel aufgenommen werden. Je nach Ausführungsform des Clips ist eine Positionierung des Clips über der Befestigungsöffnung mit dem Auge des Monteurs zu kontrollieren. Der Schenkel auf der einen Seite der Platte kann beim Einbringen einer Befestigungseinrichtung wegbiegen, so dass der Clip seine Position verliert und die Verbindung mit der zweiten Platte nicht mehr möglich ist. Daher offenbart die DE 20 2006 014 151 einen Clipkörper, der ein Positionierelement (Flansch) aufweist, welches durch eine Öffnung der Platte hindurchführbar ist und so die Position des Clipkörper relativ zur Plattenöffnung festlegt.

Davon ausgehend ist es eine Aufgabe der Erfindung, einen Clipkörper, einen Clip und eine Befestigungsanordnung zur Verfügung zu stellen, mit denen die Probleme und Nachteile des Standes der Technik ausgeräumt werden und die insbesondere eine zuverlässige und praktische Positionierung des Clips an der Platte ermöglichen, wobei die Befestigungsanordnung mit zusätzlicher Stabilität ausgestattet sein soll.

Diese Aufgabe wird mit den Merkmalen des unabhängigen Anspruches gelöst. Vorteilhafte Ausgestaltungen der Erfindung sind in den abhängigen Ansprüchen angegeben.

Die Erfindung betrifft einen Clipkörper mit einer Halterung für eine Befestigungseinrichtung, wobei der Clipkörper an einer mit mindestens einer Befestigungsöffnung versehenen Platte befestigbar ist und mindestens ein Positionierelement aufweist. Dieses Positionierelement ist durch die Befestigungsöffnung der Platte hindurchführbar und durch einen Anschlag des mindestens einen Positionierelementes an einem Rand der Befestigungsöffnung der Clipkörper an der Platte positionierbar Das Positionierelement ist ferner durch die Befestigungsöffnung der Platte hindurchführbar und durch einen Anschlag des Positionierelementes an einem Rand der Befestigungsöffnung der Clipkörper an der Platte positionierbar. Durch das Positionierelement gelingt es leicht, den Clip korrekt über der Öffnung der Platte zu positionieren.

Die Erfindung baut auf dem gattungsgemässen Clipkörper dadurch auf, dass das Positionierelement gleichzeitig ein Arretierelement ist, mit dem die Platte an einer der Halterung abgewandten Seite kontaktierbar ist und das mindestens eine Zunge aufweist. Hierdurch erhält der Clipkörper eine Stabilisierung in axialer Richtung. Während Clipkörper des Standes der Technik im Bereich der Befestigungsanordnung nur dadurch axial stabilisiert werden, dass die Befestigungseinrichtung komplettiert wird, ist dies bei dem vorliegenden Clipkörper anders. Hier ist bereits eine axiale Stabilisierung in dem Moment gegeben, in dem der Clipkörper in die Platte eingesetzt ist. Dies erleichtert die Arbeit am Objekt und auch für die fertiggestellte Befestigungsanordnung wird durch das Arretierelement eine zusätzliche Stabilität zur Verfügung gestellt.

Es ist ferner möglich, dass der Clipkörper mindestens ein Versteifungselement aufweist. Versteifungselemente, beispielsweise Rippen, helfen dabei, dem Clipkörpern eine zusätzliche Stabilität zu verleihen, so dass dieser insbesondere beim Komplettieren der Befestigungseinrichtung seine Anlage an der Platte aufrecht erhält.

Nützlicherweise ist vorgesehen, dass der Clipkörper aus einem isolierenden Material und/oder einem Material hergestellt ist, das Kontaktkorrosion verhindert. Da die Clipkörper zur Herstellung einer Befestigungsanordnung in verschiedenen Umgebungen eingesetzt werden, sollte auf die Vermeidung von Korrosionsbildung unter allen Umständen geachtet werden. Gerade die Bereiche, in denen Befestigungsanordnungen vorgesehen sind, sind besonderen mechanischen Belastungen ausgesetzt, so dass eine Schwächung durch Korrosion in diesen Bereichen nicht akzeptabel ist, insbesondere, wenn es um sicherheitsrelevante Bereiche geht, wie sie in der Kraftfahrzeug- und Luft- und Raumfahrttechnik häufig anzutreffen sind.

In diesem Zusammenhang kann es sinnvoll sein, dass der Clipkörper aus Kunststoff besteht.

Weiterhin ist es auch in diesem Zusammenhang nützlich, dass an dem Clipkörper mindestens ein Dichtungselement angebracht ist. Dichtungselemente können ferner dafür sorgen, dass verschiedene Seiten der miteinander in Verbindung gebrachten Platten gasdicht und/oder flüssigkeitsdicht voneinander getrennt werden können.

Die Erfindung betrifft weiterhin einen Clip mit einem Clipkörper, wie vorstehend ausgeführt, und mit einer Befestigungseinrichtung.

Nützlicherweise ist vorgesehen, dass die Befestigungseinrichtung bolzenartig ist.

Besondere Ausführungsformen des Clips sind in der Weise weitergebildet,
- dass die Befestigungseinrichtung einen Haltenocken und einen Pin umfasst,
- dass die Befestigungseinrichtung eine Mutter und eine Schraube umfasst,
- dass die Befestigungseinrichtung einen Federclip und einen Pin umfasst, oder
- dass die Befestigungseinrichtung eine Kegelmutter und eine Schraube umfasst.

Gemäß einer besonders bevorzugten Ausführungsform des erfindungsgemäßen Clips ist vorgesehen, dass die Befestigungseinrichtung in der Halterung in mindestens einer Richtung parallel zu der Platte mit Spiel gehalten ist. Durch das Spiel der Befestigungseinrichtung in der Halterung wird der gesamten Befestigungsanordnung eine ausreichende Toleranzfähigkeit zuteil, so dass der Clip auch für Aufgaben eingesetzt werden kann, bei denen von vornherein eine gewisse Toleranz erforderlich ist.

Die Erfindung betrifft weiterhin eine Befestigungsanordnung mit einem Clip, wie vorstehend ausgeführt, und einer mit einer Befestigungsöffnung ausgestatteten Platte, wobei die Platte insbesondere im Innenbereich eines Fahrzeugs oder Flugzeugs angeordnet ist.

Die Erfindung wird nun mit Bezug auf die begleitenden Zeichnungen anhand besonders bevorzugter Ausführungsformen beispielhaft erläutert.
- Figur 1: zeigt eine erste perspektivische Darstellung einer ersten Ausführungsform eines Clipkörpers.
- Figur 2: zeigt eine zweite perspektivische Darstellung der ersten Ausführungsform eines Clipkörpers.
- Figur 3: zeigt eine erste perspektivische Darstellung einer zweiten Ausführungsform eines Clipkörpers.
- Figur 4: zeigt eine zweite perspektivische Darstellung einer zweiten Ausführungsform eines Clipkörpers.
- Figur 5: zeigt eine erste perspektivische Darstellung einer dritten Ausführungsform eines Clipkörpers.
- Figur 6: zeigt eine zweite perspektivische Darstellung einer dritten Ausführungsform eines Clipkörpers.
- Figur 7: zeigt eine perspektivische Darstellung einer ersten Ausführungsform eines Clips.
- Figur 8: zeigt einen Schnitt durch eine Befestigungsanordnung mit einem Clip gemäß Figur 7.
- Figur 9: zeigt eine perspektivische Darstellung einer zweiten Ausführungsform eines Clips.
- Figur 10: zeigt einen Schnitt durch eine Befestigungsanordnung mit einem Clip gemäß Figur 9.
- Figur 11: zeigt eine perspektivische Darstellung einer dritten Ausführungsform eines Clips.
- Figur 12: zeigt einen Schnitt durch eine Befestigungsanordnung mit einem Clip gemäß Figur 11.
- Figur 13: zeigt eine perspektivische Darstellung einer vierten Ausführungsform eines Clips.
- Figur 14: zeigt einen Schnitt durch eine Befestigungsanordnung mit einem Clip gemäß Figur 13.
- Figur 15: zeigt eine perspektivische Darstellung einer Befestigungsanordnung.
- Figur 16: zeigt eine erste perspektivische Teildarstellung eines Clipkörpers.
- Figur 17: zeigt eine zweite perspektivische Teildarstellung eines Clipkörpers.

Bei der nachfolgenden Beschreibung detaillierter Ausführungsformen der Erfindung bezeichnen gleiche Bezugszeichen gleiche oder vergleichbare Komponenten.

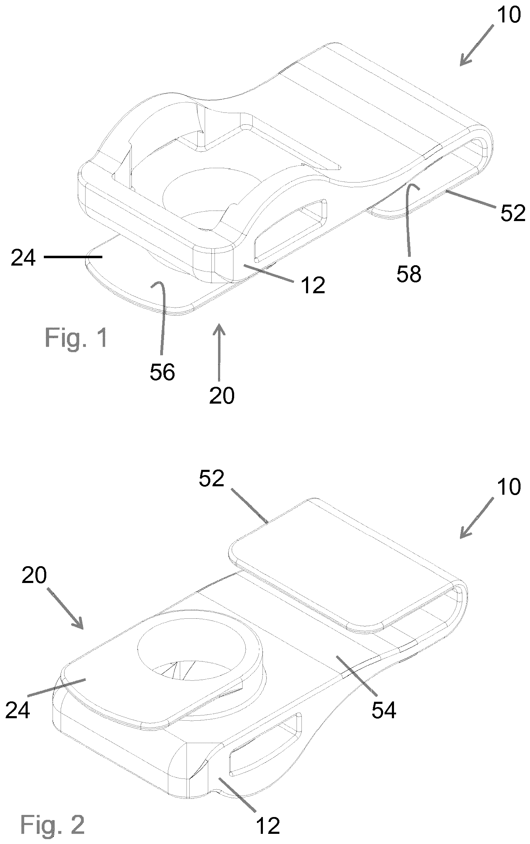

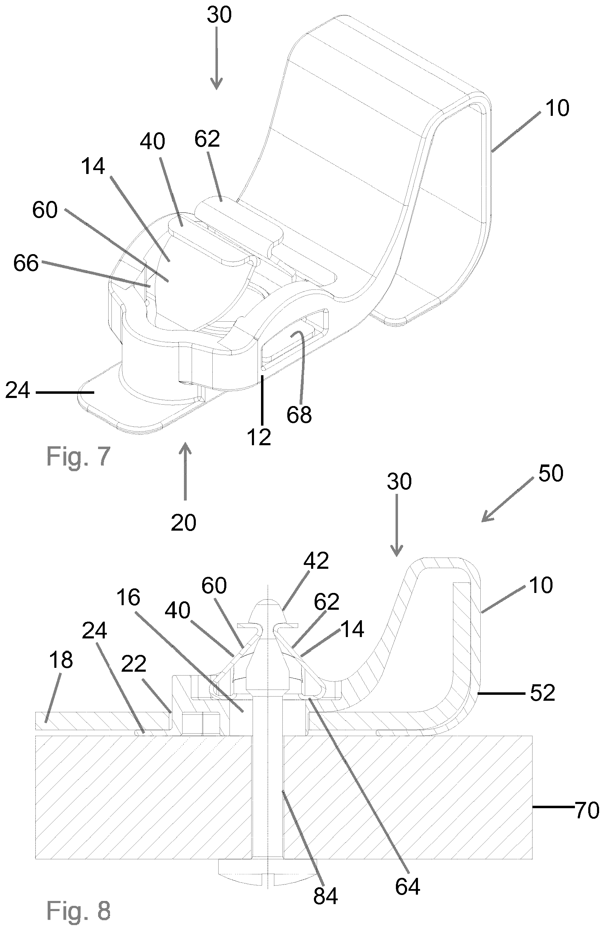

Figur 1 zeigt eine erste perspektivische Darstellung einer ersten Ausführungsform eines Clipkörpers 10. Figur 2 zeigt eine zweite perspektivische Darstellung der ersten Ausführungsform eines Clipkörpers 10. Der Clipkörper 10 hat eine Halterung 12 für eine hier nicht dargestellte Befestigungseinrichtung. Befestigungseinrichtungen von verschiedener Art sind in den Figuren 7 bis 14 dargestellt und dort allgemein mit dem Bezugszeichen 14 gekennzeichnet. Weiterhin umfasst der Clipkörper 10 ein Positionierelement 20. Das hier gezeigte Positionierelement ist für eine kreisförmige Befestigungsöffnung geeignet. Dieses Positionierelement 20 hilft dabei, den Clipkörper 10 korrekt im Bereich einer Befestigungsöffnung einer hier nicht dargestellten Platte zu positionieren. Platten mit Befestigungsöffnungen sind in den Figuren 8, 10, 12, 14 und 15 dargestellt, wobei die Platten dort allgemein mit dem Bezugszeichen 18 bezeichnet sind, während die Befestigungsöffnungen das Bezugszeichen 16 tragen. Das Positionierelement ist gleichzeitig ein Arretierelement beziehungsweise mit einem Arretierelement verbunden, das vorzugsweise als Zunge 24 ausgebildet ist. Mit dieser Zunge 24 untergreift der Clipkörper 10 die Platte, an der er befestigt ist. Die Zunge 24 wird zu diesem Zweck durch die Befestigungsöffnung der Platte hindurch geschoben. Die Zunge 24 beziehungsweise das Positionierelement 20 definieren insofern einen ersten Endbereich des Clipkörpers. An einem zweiten Endbereich des Clipkörpers ist dieser mit einer Haltelasche 52 ausgestattet. Diese dient dazu, um einen Randbereich der Platte, an der der Clipkörper 10 befestigt wird, herumzugreifen. Im vorliegenden Ausführungsbeispiel hat der Clipkörper somit drei Anlagebereiche 54, 56, 58 für die Platte. Der erste Anlagebereich 54 kontaktiert die Platte auf der der Halterung 12 zugewandten Seite. Dieser Anlagebereich 54 ist eine Unterseite des Clipkörpers 10, wenn dieser mit der Halterung auf der Oberseite einer Platte befestigt wird. Ein weiterer Anlagebereich 56 wird von der Oberseite der Zunge 24 definiert. Ein wiederum weiterer Anlagebereich 58 ist durch die Oberseite der Haltelasche 52 definiert. Im vorliegenden Beispiel liegen die Anlagebereiche 56, 58 von Zunge 24 und Haltelasche 52 in einer Ebene. Dies ist sinnvoll, wenn die Platte eben ist und im Randbereich sowie in der Umgebung der Befestigungsöffnung dieselbe Dicke aufweist. Variiert die Plattendicke hingegen, so liegen die Anlagebereiche 56, 58 von Zunge 24 und Haltelasche 52 in unterschiedlichen Ebenen.

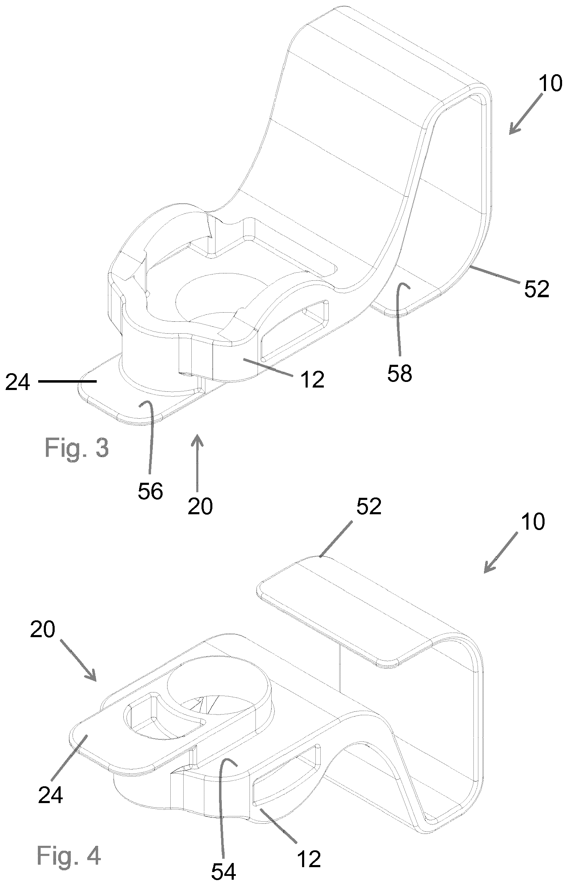

Figur 3 zeigt eine erste perspektivische Darstellung einer zweiten Ausführungsform eines Clipkörpers 10. Figur 4 zeigt eine zweite perspektivische Darstellung einer zweiten Ausführungsform eines Clipkörpers 10. Die hier dargestellte Ausführungsform eines Clipkörpers 10 unterscheidet sich von derjenigen gemäß den Figuren 1 und 2 durch eine unterschiedliche Ausgestaltung des Positionierelementes 20 sowie einer unterschiedlichen Ausgestaltung der Haltelasche 52. Der Anlagebereich 54 des Clipkörpers 10 oberhalb der Platte ist im Bereich des Positionierelementes 20 anders ausgestaltet. Das hier gezeigte Positionierelement ist für eine langlochartige Befestigungsöffnung geeignet. Die Haltelasche 52 ist so ausgestaltet, dass sie um eine Platte mit einem gebogenen Rand greifen kann und hier einen möglichst sicheren Halt zur Verfügung stellt.

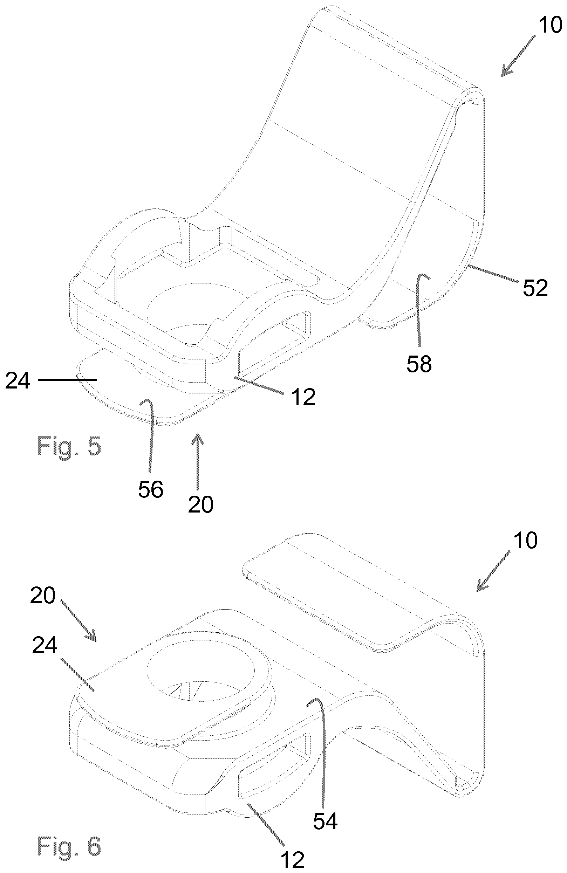

Figur 5 zeigt eine erste perspektivische Darstellung einer dritten Ausführungsform eines Clipkörpers 10. Figur 6 zeigt eine zweite perspektivische Darstellung einer dritten Ausführungsform eines Clipkörpers 10. Bei dieser Ausführungsform ist das Positionierelement 20 wieder ähnlich gestaltet, wie bei der Ausführungsform gemäß den Figuren 1 und 2, wiederum anders ausgestaltet ist der Haltebereich 52, um dem Clipkörper Halt an wiederum anders geformten Randbereichen einer Platte zu vermitteln.

Figur 7 zeigt eine perspektivische Darstellung einer ersten Ausführungsform eines Clips 30. Figur 8 zeigt einen Schnitt durch eine Befestigungsanordnung 50 mit einem Clip 30 gemäß Figur 7. Am Beispiel des Clipkörpers 10 gemäß den Figuren 3 und 4 wird dessen Vervollständigung zum Clip 30 und dessen Zusammenwirken mit einer kompletten Befestigungsanordnung 50 erläutert. Der Clipkörper 10 ist mit einer Befestigungseinrichtung 14 ausgestattet, die im vorliegenden Fall als Federclip 40 realisiert ist. Der Federclip 40 umfasst zwei federnde Schenkel 60, 62, die über einen gelochten Verbindungsbereich 64 verbunden sind. An dem Verbindungsbereich 64 sind Zungen 66, 68 angeordnet, mit welchen der Federclip 40 in die Halterung 12 des Clipkörpers 10 eingreift und hierüber an dem Clipkörper 10 gehaltert wird. Je nach den Abmessungen der Halterung 12 und der Befestigungseinrichtung 14, insbesondere der Zungen 66, 68 an der Befestigungseinrichtung 14, wird die Befestigungseinrichtung 14 gekippt in die Halterung eingesetzt, wobei zuerst eine Zunge 66, 68 in einer Öffnung der Halterung 12 eingeführt wird. Danach wird die Befestigungseinrichtung 14 so bewegt, so dass der Verbindungsbereich 64 parallel zum Clipkörper 10 ist. Durch Verschieben der Befestigungseinrichtung 14 in eine Symmetrieposition am Clipkörper 10 erreicht diese ihre Endposition. In einer alternativen Ausführungsform kann die Befestigungseinrichtung 14 in der Halterung 12 des Clipkörpers 10 angeordnet werden, indem sie zunächst, bezogen auf Ihre Endposition, um 90° verdreht in den Clipkörper 10 eingeführt wird. Durch ein Drehen des Clipkörpers um 90° in die Endposition gelangen die Zungen 66, 68 in die Öffnungen der Halterung 12, so dass dann der geforderte Halt gegeben ist. Beide Zungen 66, 68 liegen dann in der Halterung 12. Das Positionierelement 20 liegt dann am Rand 22 der Befestigungsöffnung 16 an. Obwohl eine Endposition durch eine symmetrische Anordnung der Befestigungseinrichtung 14 im Clipkörper 10 definiert ist, ist gleichwohl vorzugsweise ein gewisses Spiel vorhanden, so dass die Befestigungseinrichtung 14 in dem Clipkörper 10 hin- und herbewegt werden kann. Dieses Spiel sollte mindestens in einer Richtung parallel zu der Platte gegeben sein, vorzugsweise in alle Richtungen parallel zu der Platte. Im montierten Zustand des Clips untergreift dieser die Platte 18 mittels der Zunge 24 im Bereich des Positionierelementes 20. Ebenfalls wird die Platte 18 durch die Haltelasche 52 untergriffen. Die so hergestellte Anordnung aus Platte 18 und Clip 30 wird auf eine zweite Platte 70 aufgesetzt, so dass die Zunge 24 und der die Platte 18 untergreifende Teil der Haltelasche 52 zwischen den Platten 18, 70 liegen. Sodann wird durch die Öffnungen 84, 16 ein Pin 42 geführt. Dieser treibt mit einem verdickten Ende die Schenkel 60, 62 des Federclips auseinander. Seine Endposition hat der Pin 42 dann erreicht, wenn die Schenkel 60, 62 wieder zusammenfedern und in einen verjüngten Bereich unterhalb des verdickten Endes des Pins 42 gelangen. Der Pin 42 ist vorzugsweise in dem verjüngten Bereich unterhalb des verdickten Endes nicht rotationssymmetrisch, sondern er weist in einer Richtung senkrecht zur Betrachtungseben der Figur 8 eine Dicke auf, die seinem verdickten Ende entspricht. Hierdurch ist es möglich, den Pin 42 wieder aus der Befestigungsanordnung zu entfernen. Indem der Pin 42 nämlich gedreht wird, treibt er die Schenkel 60, 62 des Federclips 40 wieder auseinander, so dass das verdickte Ende des Pins 42 keinen Halt mehr im Federclip 40 findet und herausgezogen werden kann.

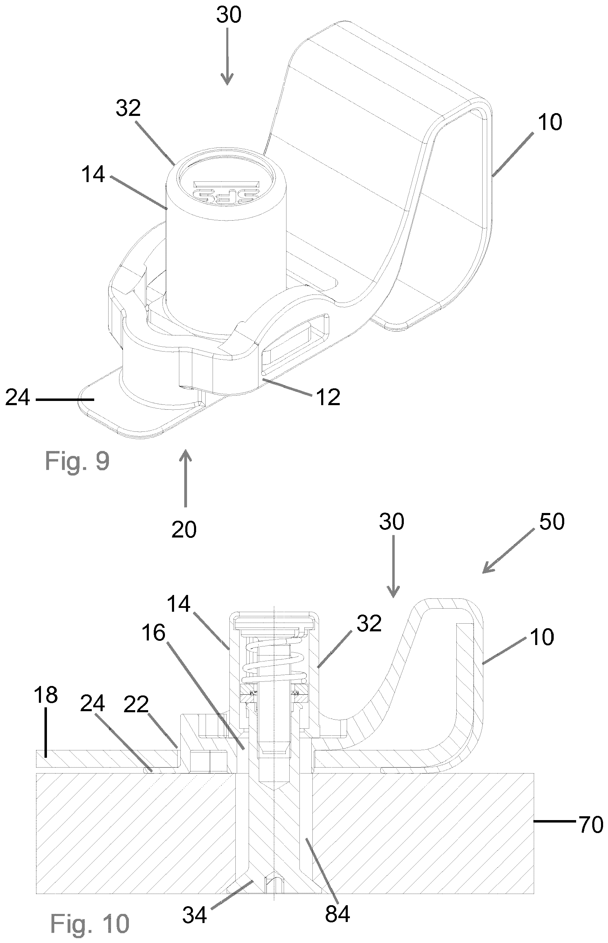

Figur 9 zeigt eine perspektivische Darstellung einer zweiten Ausführungsform eines Clips 30. Figur 10 zeigt einen Schnitt durch eine Befestigungsanordnung mit einem Clip 30 gemäß Figur 9. Am baugleichen Clipkörper 10, wie im Zusammenhang mit den Figuren 7 und 8 beschrieben, ist eine andersartige Befestigungseinrichtung 14 angeordnet. Es handelt sich hier um einen Haltenocken 32, der mit einem Pin 34 zusammenwirken kann. Die Funktionsweise dieser Anordnung aus Haltenocken 32 und Pin 34 ist in DE 10 2007 959 148 B4 detailliert beschrieben, deren diesbezügliche Offenbarung vollständig zum Offenbarungsgehalt der vorliegenden Offenbarung hinzuzählt.

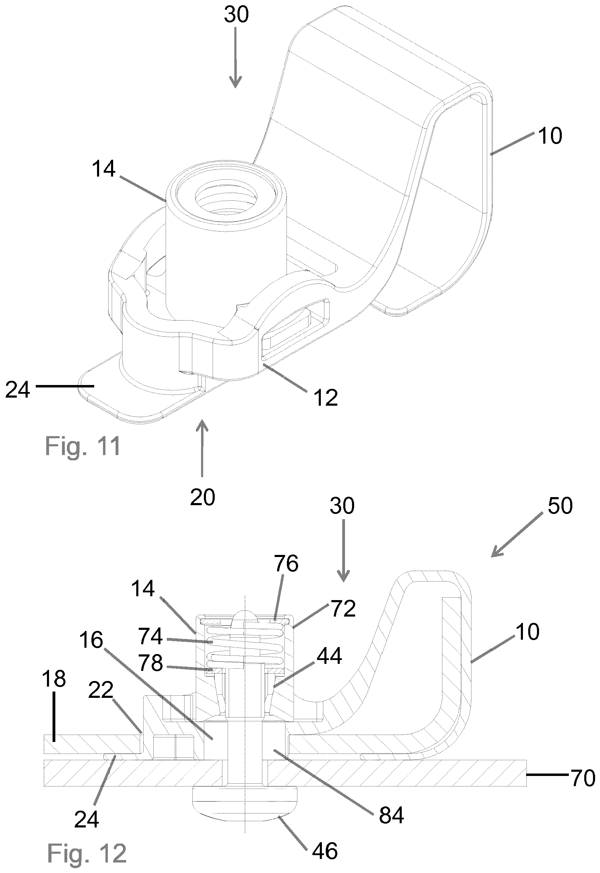

Figur 11 zeigt eine perspektivische Darstellung einer dritten Ausführungsform eines Clips 30. Figur 12 zeigt einen Schnitt durch eine Befestigungsanordnung mit einem Clip 30 gemäß Figur 11. Wiederum am Beispiel desselben Clipkörpers 10, wie in den Figuren 7, 8, 9, 10 ist eine weitere Variante eines Clips 30 gezeigt. Dieser Clip 30 hat als Befestigungseinrichtung 14 eine Kegelmutter 44, die mit einer Schraube 46 zusammenwirkt. Die Kegelmutter 44 sitzt in einem Gehäuse 72, und sie wird durch eine Feder 74, die zwischen zwei Platten 76, 78 gespannt ist, in eine Endposition in einem Kegelsitz des Gehäuses 72 getrieben. Wird ausgehend von dieser Endposition eine Schraube 46 in die Kegelmutter 44 hineingedrückt - hierbei muss die Schraube 46 nicht gedreht werden - , so weicht die Kegelmutter 44 unter Kompression der Feder 74 aus. Die Kegelmutter 44 ist so beschaffen, dass sich hierbei der Durchmesser ihres Innengewindes vergrößern kann. Die Schraube 46 kann somit in die Kegelmutter 44 eindringen. Hat die Schraube 46 ihre Endposition erreicht, so liegen die Gewindegänge der Schraube und der Kegelmutter 44 ineinander, so dass die Kegelmutter 44 wieder vollständig oder nahezu vollständig in ihrem Sitz innerhalb des Gehäuses 72 angeordnet sein kann. Wenn man die Schraube 46 aus der Befestigungsanordnung 50 entfernen will, so lässt sich dies mittels Herausdrehen bewerkstelligen.

Bei einer anderen Ausführungsform ist es nicht erforderlich, eine Mutter und eine Schraube zu verwenden. Vielmehr kann an Stelle der Mutter 44 ein Gebilde verwendet werden, das irgendwie im Innenbereich mit Rillen versehen ist. Entsprechende Rillen hat ein Stift. Das Hineingeben des Stiftes in das Gebilde erfolgt identisch, wie im Zusammenhang mit der Kegelmutter 44 und der Schraube 46 beschrieben. Allerdings ist ein Herausbewegen des Gebildes aus der Befestigungsanordnung dann nicht durch eine Drehbewegung möglich, wie es im Zusammenhang mit der Kegelmutter 44 und der Schraube 46 beschrieben wurde.

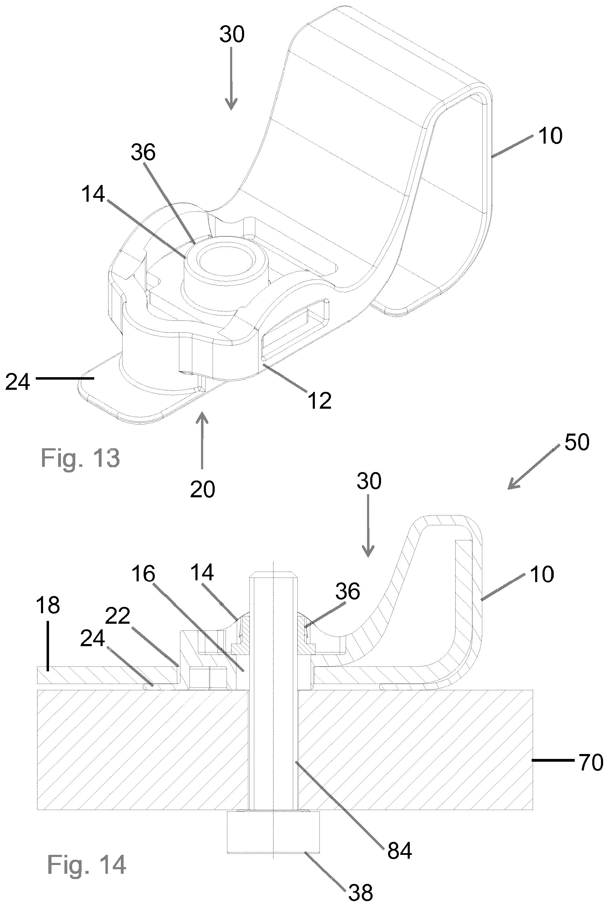

Figur 13 zeigt eine perspektivische Darstellung einer vierten Ausführungsform eines Clips 30. Figur 14 zeigt einen Schnitt durch eine Befestigungsanordnung mit einem Clip 30 gemäß Figur 13. Der Clipkörper 10 ist wiederum identisch zu den Clipkörpern der Befestigungsanordnungen 50, die im Zusammenhang mit den Figuren 7, 8, 9, 10, 11, 12 beschrieben wurden. Die Befestigungseinrichtung 14 wird hier durch eine Mutter 36 gebildet, die mit einer Schraube 38 zusammenwirkt.

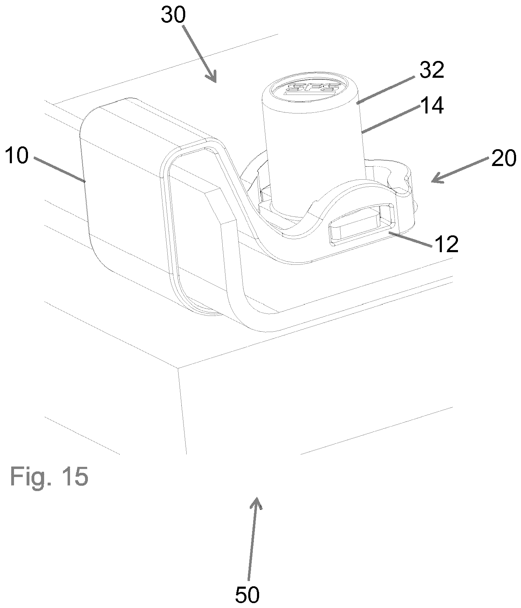

Figur 15 zeigt eine perspektivische Darstellung einer Befestigungsanordnung.

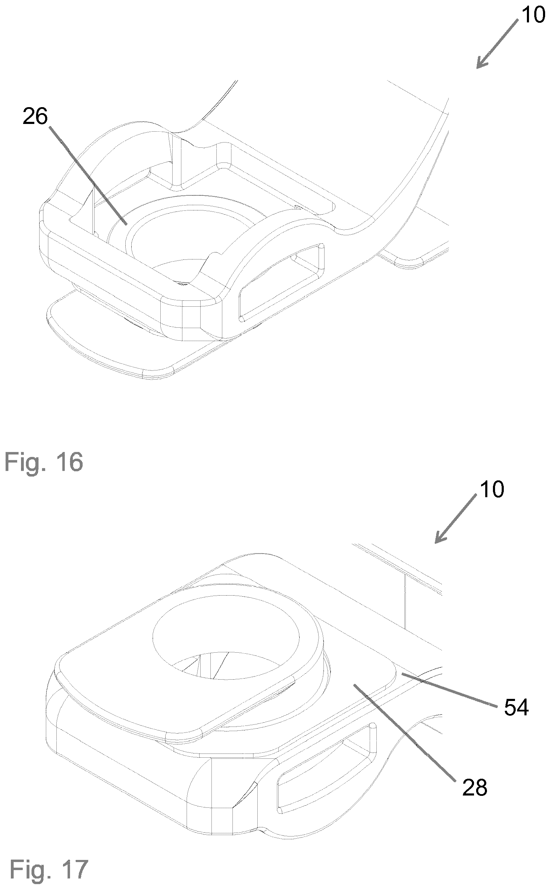

Figur 16 zeigt eine erste perspektivische Teildarstellung eines Clipkörpers 10. Figur 17 zeigt eine zweite perspektivische Teildarstellung eines Clipkörpers 10. An dem Anlagebereich 54 des Clipkörpers 10 ist eine Dichtung 28 angeordnet. Diese liegt also auf der Oberseite der hier nicht dargestellten Platte. Sie verhindert, je nach Materialien der beteiligten Komponenten Kontaktkorrosion. Weiterhin kann ein Bereich oberhalb der Befestigungsanordnung von einem Bereich unterhalb der Befestigungsanordnung gas- beziehungsweise flüssigkeitsdicht getrennt werden. Eine weitere Dichtung 26 ist dort angeordnet, wo die Befestigungseinrichtung 14 auf dem Clipkörper 10 aufsitzt. Hierdurch kann wiederum Kontaktkorrosion verhindert werden. Ebenfalls wird zur Abdichtung der verschiedenen Bereiche beigetragen.

### Bezugszeichenliste

- 10: Clipkörper
- 12: Halterung
- 14: Befestigungseinrichtung
- 16: Befestigungsöffnung
- 18: Platte
- 20: Positionierelement
- 22: Rand
- 24: Zunge
- 26: Dichtungselement
- 28: Dichtungselement
- 30: Clip
- 32: Haltenocken
- 34: Pin
- 36: Mutter
- 38: Schraube
- 40: Federclip
- 42: Pin
- 44: Kegelmutter
- 46: Schraube
- 50: Befestigungsanordnung
- 52: Haltelasche
- 54: Anlagebereich
- 56: Anlagebereich
- 58: Anlagebereich
- 60: Schenkel
- 62: Schenkel
- 64: Verbindungsbereich
- 66: Zunge
- 68: Zunge
- 70: Platte
- 72: Gehäuse
- 74: Feder
- 76: Platte
- 78: Platte
- 84: Öffnung

## Patentansprüche

1. Clipkörper (10) mit einer Halterung (12) für eine Befestigungseinrichtung (14), wobei der Clipkörper (10) an einer mit mindestens einer Befestigungsöffnung (16) versehenen Platte (18) befestigbar ist, wobei der Clipkörper (10) zwei Schenkel aufweist, von denen einer auf einer ersten Seite der Platte (18) und der andere auf einer zweiten Seite der Platte (18) angeordnet werden kann, und zu diesem Zweck auf einen Rand der Platte (18) aufgesteckt wird und wobei der Clipkörper (10) mindestens ein Positionierelement (20) aufweist, welches durch die Befestigungsöffnung (16) der Platte (18) hindurchführbar ist und der Clipkörper (10) durch einen Anschlag des Positionierelementes (20) an einem Rand (22) der Befestigungsöffnung (16) an der Platte (18) positionierbar ist, **dadurch gekennzeichnet, dass** das Positionierelement (20) gleichzeitig ein Arretierelement zur Stabilisierung in axialer Richtung ist, mit dem die Platte an einer der Halterung (12) abgewandten Seite kontaktierbar ist und das mindestens eine Zunge (24) aufweist.

2. Clipkörper (10) nach Anspruch 1, **dadurch gekennzeichnet, dass** der Clipkörper (10) mindestens ein Versteifungselement aufweist.

3. Clipkörper (10) nach einem der vorhergehenden Ansprüche, **dadurch gekennzeichnet, dass** der Clipkörper (10) aus einem isolierenden Material und/oder einem Material hergestellt ist, das Kontaktkorrosion verhindert.

4. Clipkörper (10) nach einem der vorhergehenden Ansprüche, **dadurch gekennzeichnet, dass** der Clipkörper (10) aus Kunststoff besteht.

5. Clipkörper (10) nach einem der vorhergehenden Ansprüche, **dadurch gekennzeichnet, dass** an dem Clipkörper (10) mindestens ein Dichtungselement angebracht ist.

6. Clip (30) mit einem Clipkörper (10) nach einem der vorhergehenden Ansprüche und mit einer Befestigungseinrichtung (14).

7. Clip (30) nach Anspruch 6, **dadurch gekennzeichnet, dass** die Befestigungseinrichtung (14) zumindest teilweise bolzenartig ist.

8. Clip (30) nach Anspruch 6 oder 7, **dadurch gekennzeichnet, dass** die Befestigungseinrichtung (14) einen Haltenocken (32) und einen Pin (34) umfasst.

9. Clip (30) nach Anspruch 6 oder 7, **dadurch gekennzeichnet, dass** die Befestigungseinrichtung (14) eine Mutter (36) und eine Schraube (38) umfasst.

10. Clip (30) nach Anspruch 6 oder 7, **dadurch gekennzeichnet, dass** die Befestigungseinrichtung (14) einen Federclip (40) und einen Pin (42) umfasst.

11. Clip (30) nach Anspruch 6 oder 7, **dadurch gekennzeichnet, dass** die Befestigungseinrichtung (14) eine Kegelmutter (44) und eine Schraube (46) umfasst.

12. Clip (30) nach einem der Ansprüche 6 bis 11, **dadurch gekennzeichnet, dass** die Befestigungseinrichtung (14) in der Halterung (12) in mindestens einer Richtung parallel zu der Platte (18) mit Spiel gehalten ist.

13. Befestigungsanordnung (50) mit einem Clip (30) nach einem der Ansprüche 6 bis 12 und einer mit einer Befestigungsöffnung (16) ausgestatteten Platte (18), wobei die Platte (18) im Innenbereich eines Fahrzeugs oder Flugzeugs angeordnet ist.

## Claims

1. A clip body (10) with a retainer (12) for a fastening device (14), wherein the clip body (10) can be fastened to a panel (18) provided with at least one fastening opening (16), wherein the clip body (10) has two limbs, one of which can be arranged on a first side of the panel (18) and the other one can be arranged on a second side of the panel (18) and for this purpose is pushed onto an edge of the panel (18), and wherein the clip body (10) has at least one positioning element (20) which can be guided through the fastening opening (16) of the plate (18), and the clip body (10) can be positioned on the panel (18) by a stop of the positioning element (20) at an edge (22) of the fastening opening (16), **characterized in that** the positioning element (20) is at the same time a locking element for stabilization in the axial direction with which the panel can be contacted on a side facing away from the retainer (12) and which has at least one tongue (24).

2. The clip body (10) according to claim 1, **characterized in that** the clip body (10) has at least one reinforcement element.

3. The clip body (10) according to any one of the preceding claims, **characterized in that** the clip body (10) is produced from an insulating material and/or from a material which prevents contact corrosion.

4. The clip body (10) according to any one of the preceding claims, **characterized in that** the clip body (10) is made of plastic.

5. The clip body (10) according to any one of the preceding claims, **characterized in that** at least one sealing element is attached to the clip body (10) .

6. A clip (30) with a clip body (10) according to any one of the preceding claims and with a fastening device (14).

7. The clip (30) according to claim 6, **characterized in that** the fastening device (14) is at least partially bolt-shaped.

8. The clip (30) according to claim 6 or 7, **characterized in that** the fastening device (14) comprises a holding cam (32) and a pin (34).

9. The clip (30) according to claim 6 or 7, **characterized in that** the fastening device (14) comprises a nut (36) and a screw (38).

10. The clip (30) according to claim 6 or 7, **characterized in that** the fastening device (14) comprises a spring clip (40) and a pin (42).

11. The clip (30) according to claim 6 or 7, **characterized in that** the fastening device (14) comprises a taper nut (44) and a screw (46).

12. The clip (30) according to any one of claims 6 to 11, **characterized in that** the fastening device (14) is held in the retainer (12) with play in at least one direction that is parallel to the panel (18).

13. A fastening arrangement (50) with a clip (30) according to any one of claims 6 to 12 and with a panel (18) provided with a fastening opening (16), wherein the panel (18) is arranged in the interior of a vehicle or aircraft.

## Revendications

1. Corps d'attache à pince (10) avec un support (12) pour un dispositif de fixation (14), sachant que le corps d'attache à pince (10) peut être fixé à une plaque (18) munie d'au moins une ouverture de fixation (16), sachant que le corps d'attache à pince (10) comporte deux branches dont l'une peut être disposée sur un premier côté de la plaque (18) et l'autre sur un deuxième côté de la plaque (18) et est monté dans ce but sur un bord de la plaque (18) et sachant que le corps d'attache à pince (10) comporte au moins un élément de positionnement (20), lequel peut être passé à travers l'ouverture de fixation (16) de la plaque (18) et le corps d'attache à pince (10) peut être positionné par une butée de l'élément de positionnement (20) sur un bord (22) de l'ouverture de fixation (16) sur la plaque (18), **caractérisé en ce que** l'élément de positionnement (20) est en même temps un élément de blocage pour stabiliser en direction axiale avec lequel la plaque peut être mise en contact sur un côté opposé au support (12) et qui comporte au moins une languette (24).

2. Corps d'attache à pince (10) selon la revendication 1, **caractérisé en ce que** le corps d'attache à pince (10) comporte au moins un élément de renforcement.

3. Corps d'attache à pince (10) selon l'une quelconque des revendications précédentes, **caractérisé en ce que** le corps d'attache à pince (10) est fabriqué dans un matériau isolant et/ou un matériau qui évite la corrosion par contact.

4. Corps d'attache à pince (10) selon l'une quelconque des revendications précédentes, **caractérisé en ce que** le corps d'attache à pince (10) est composé de matière plastique.

5. Corps d'attache à pince (10) selon l'une quelconque des revendications précédentes, **caractérisé en ce qu'** au moins un élément d'étanchéité est disposé sur le corps d'attache à pince (10).

6. Attache à pince (30) avec un corps d'attache à pince (10) selon l'une quelconque des revendications précédentes et avec un dispositif de fixation (14).

7. Attache à pince (30) selon la revendication 6, **caractérisée en ce que** le dispositif de fixation (14) est au moins en partie analogue à un boulon.

8. Attache à pince (30) selon la revendication 6 ou 7, **caractérisée en ce que** le dispositif de fixation (14) comprend une came de retenue (32) et une broche (34) .

9. Attache à pince (30) selon la revendication 6 ou 7, **caractérisée en ce que** le dispositif de fixation (14) comprend un écrou (36) et une vis (38).

10. Attache à pince (30) selon la revendication 6 ou 7, **caractérisée en ce que** le dispositif de fixation (14) comprend une attache à ressort (40) et une broche (42).

11. Attache à pince (30) selon la revendication 6 ou 7, **caractérisée en ce que** le dispositif de fixation (14) comprend un écrou conique (44) et une vis (46) .

12. Attache à pince (30) selon l'une quelconque des revendications 6 à 11, **caractérisée en ce que** le dispositif de fixation (14) est maintenu avec jeu dans le support (12) dans au moins une direction parallèlement à la plaque (18).

13. Système de fixation (50) avec une attache à pince (30) selon l'une quelconque des revendications 6 à 12 et une plaque (18) équipée d'une ouverture de fixation (16), sachant que la plaque (18) est disposée dans la zone intérieure d'un véhicule ou d'un avion.
